# EUROPEAN PATENT SPECIFICATION

(11) **EP 2 229 475 B1**
(45) Date of publication and mention of the grant of the patent: **12.07.2017**
(21) Application number: 08851033.4
(22) Date of filing: 12.11.2008
(51) Int. Cl.: D06F 39/08, D06F 37/02, D06F 37/04, D06F 37/26

(54) **WASHER-EXTRACTOR MACHINE**
WASCH- UND SCHLEUDERMASCHINE
LESSIVEUSE-ESSOREUSE

(30) Priority: 12.11.2007 TR 200707754; 12.11.2008 TR 200808605
(43) Date of publication of application: 22.09.2010
(73) Proprietor: Simsek, Tulga, 35540 Izmir (TR)
(72) Inventor: Simsek, Tulga, 35540 Izmir (TR)
(74) Representative: Wallinger, Michael
(86) International application number: PCT/TR2008/000127
(87) International publication number: WO 2009/064262

(56) References cited:
- EP-A- 0 533 004
- EP-A- 1 382 732
- EP-A- 1 507 032
- EP-A- 1 762 649
- EP-A1- 1 293 594
- WO-A-85/03729
- WO-A-2008/079070
- DE-A1- 2 915 092
- DE-A1-102006 041 431
- DE-U- 1 827 413
- FR-A- 1 177 373
- JP-A- 4 152 990
- JP-A- 2005 177 462
- US-A- 2 966 051
- US-A- 4 971 449
- US-A1- 2005 015 892
- US-A1- 2006 016 020
- US-A1- 2007 028 654

## Description

This invention is related to washer-extractor machines and in particular to drum type washing machines that provide saving from water, energy and time and at the same time increase washing and extraction efficiency. The machine according to this invention prevents the harm of the textile caused by the drum perforations and also during the high speed spinning stage.
This invention is also related to a washing and rinsing process realized using this machine.

Washing machines are provided with various capacities for domestic and industrial applications in order to use for various processes that enable washing and/or chemical treatment of different materials, especially textile products. Besides washing machines for domestic use, there also exist several industrial types, providing physical and chemical treatments such as washing, stone-washing, dry-cleaning, bleaching, softening, and dyeing.

Horizontal drum washing machines that constitute the object of the present application comprise a cylindrical, either horizontal or inclined with horizontal liquid tub and a perforated basket drum arranged in a same position with tub placed in it and, rotating around a shaft-bearing unit and wherein material is/are loaded. Said washing machines are divided into two groups, front loading drums wherein the drum comprises a bearing on one side only and those wherein the drum is provided with bearings on two sides.

Aforementioned drums are in general constructed from stainless steel. Perforations provided over a drum surface enable the inflow of liquid such as water, solvents, chemicals and hot water that heated outside the drum, as well as the outflow of liquid to be discharged. Centrifugal force created by the rotation of a drum at high speed to separate a certain amount of liquid absorbed by the material and drain out through drum perforations.

In order to fill the drum with liquid such as water or, to heat water, to mix chemicals into water, to measure water temperature, to measure water level, to drain water, and to collect liquid draining out through the drum perforations during a spinning cycle, a tub is needed outside the drum, and in order to prevent said drum to contact said tub while spinning, a space is necessary in between. When washing liquid required for a washing process is taken inside a tub, the amount of liquid filling the space between said tub and the drum corresponds to nearly 15-35% of necessary liquid. Liquid draining from a limited permeability drum can be restrained and flow back is maintained therein by means of a pump which has a higher flow-rate than that permeated water, enabling therefore an evacuation of the volume between the drum and the tub while at the same time an adequate amount of liquid existing inside the drum. The drum, which constitutes the object of the invention, provides considerable savings of water, energy, chemicals, and time by means of emptying said exterior space during a washing process. Saving of water and chemicals is important as far as consumption is concerned and also it is vital to decrease the amount of waste water contaminated with chemicals, thus preventing environmental pollution.

During a washing process, the interaction of water and/or chemicals with washed materials inside a drum is achieved by lifting and falling movements of said materials, which obtained with the drum rotation. Conventional perforated drums contain lifter beaters which are called ribs in sizes proportional to the diameter of the drum. In washing machines using less water, rib heights varies approximately between 6 to 12% of the diameter of the drum, while this proportion reaches 12 to 20% in machines using more water. The size of said ribs should enable lifting a considerable amount of the laundry mass. In conventional washing machines, the number of ribs is limited to 6 or maximum 8. Washing is both a chemical and a physical process. One other important function of washing machines is to extract liquid from processed material by way of a centrifugal force produced from spinning of drum at high speeds. Due to centrifugal force, extracting pressure at high speeds may attain values up to 400-500G; and in the case of high capacity machines, wherein laundry stretches very tightly over ribs, and spaces remain underneath between the ribs and drum sheet, such physical pressure may applied to said laundry to stretch towards the spaces and causes damages or tearing. On the other hand, laundry over the ribs, placed during distribution, is more close to the rotation axis, means it undergoes less centrifugal force, and more liquid remains thereon. If material is lifted by means of many small ribs or protrusions scattered in very short intervals and homogeneously over the cylindrical surface of a drum, said drum constituting the object of the invention, any damage caused to textile by normal size ribs can be prevented. Height of said small ribs and protrusions indicated here is approximately between 1 to 6% of the diameter of said drum.

Protrusive cylindrical surface of a drum also provides other advantages besides the facility of lifting washing material. Such protrusive structure, augments the physical effect while washing, helps to rotate the material in more homogeneous and more regular manner, enables better distribution of laundry inside the drum at the start of extraction and orients extracted water towards the perforations. During extraction phase, textile dispersed over a usual perforated cylindrical surface gets more and more squeezed as centrifugal force increases pressure thereon, which restrains not only water passage through the textile fibers, but also drainage ways through the drum perforations. Water drainage from a drum can be accelerated by employing adequately elevated and dense protrusions that are provided in the present invention, in which situation laundry will stretch towards the spaces between the protrusions but will not reach to block the perforations. Draining more extracted water at an equal spinning speed and equal time is provided and in return improved extraction efficiency without any change in the energy consumption is obtained.

Many solutions have been suggested to achieve water and energy savings in washing machines. The system described in the US Patent Application No 20070028654 is unable to provide solutions to problems such as water drainage from a drum obtained only during an extraction phase and out of one particular area, water having to pass through washed fabrics before attaining the perforations during an extraction and causing therefore insoluble particles to deposit inside said fabrics, impossibility re-heating if necessary, and the drain difficulties. Explanations recommended in the US Patent Application No 20050015892 and the US Patent Application No 20050028298 do not supply solutions to problems such as the backward slanting position of a drum, necessity to have said drum to spin at high speed for evacuation, water level inside said drum considerably altering the amount of water drained there from, limited amount of drainage out of said drum during both drain and extraction cycles, water passing through washed fabrics during drain and therefore depositing particles which should normally be carried away with water. Both systems suggested are difficult to put into practice because the amount of water that will pass through drum into the tub is exceed the capacity of pumps used in domestic washing machines in the case when material and water exceed the drum mouth level. Even the features of such a drum, neither placed horizontally nor cylindrically shaped as in standard and common drums, may create problems in practice. However, in order to apply all types of washing machines and washing operations, a drum should be designed so as to allow dry fabrics to be fully loaded therein and enabling water level to exceed the half level of the drum.

DE 29 15 092 A discloses a washing-extraction machine according to the features of the preamble of claim 1. The invention disclosed in the present application provides savings from water, energy, chemicals and time consumption as attempted by the foregoing references, through limiting water use by the strictly necessary amount for the inner drum, enabling implementation in all types of perforated drums horizontal or inclined with the horizontal, independent from water level or the amount of fabrics loaded therein. Moreover, as explained below in several embodiments, the application of methods, corresponding to the purpose of the present invention, has been reduced to such basic essentials that no alteration is required in the production techniques of conventional and commonly used horizontal washing machines. Providing the cylindrical surface of a drum with perforations as in ordinary drums, and enabling water drainage through said perforations during both drain and extraction cycles prevent not only efficiency loss in washing and extraction but also the creation of new problems.

### BRIEF EXPLANATION OF THE FIGURES

The invention shall be explained in detail here below with references to the attached figures, where:
**FIGURE-1** represents a perspective sectional view of a washing machine showing drum perforations in reduced size (B) and with drum mouth covered (A).
**FIGURE-2** represents a perspective sectional view of a washing machine showing drum perforations covered with a fabric (A) and with sheeting (B) that comprises perforations smaller than drum perforations (B).
**FIGURE-3** represents a perspective sectional view of drum perforations coated with sheeting that comprises a slits thereon.
**FIGURE-4** represents a perspective sectional view of drum perforations covered with sheeting that comprises perforations smaller than drum perforations, surface of said sheeting shaped in a bulging curve so as to facilitate water drainage from said drum.
**FIGURE-5** represents a perspective sectional view of numerous lifter ribs dispersed over a drum surface and a water tank arranged inside a tub.
**FIGURE-6** represents a perspective view of a perforated metal sheet that partly covers the perforated cylindrical surface of a drum, said metal sheet which is reduced in size through coating with rubber or plastic material.
**FIGURE-7** represents a perspective view of the perforated cylindrical surface of a drum coated with a material comprising protrusions.
**FIGURE-8** represents a perspective view of different protrusive materials used in coating the perforated cylindrical surface of a drum.
**FIGURE-9** represents a perspective view of various protrusive materials that are applied in pieces and assembled onto the perforated cylindrical surface of a drum and of the assemblage of said pieces.
**FIGURE-10** represents a perspective view showing the impact on laundry of a protrusive coating on the perforated cylindrical surface of a drum during extraction.
**FIGURE-11** represents a perspective view of a drum, wherein a metal sheet is given a protrusive configuration by undulating (A) or by shaping a plastic material in a mould (B), to match said metal sheet perforations with the bored zones thereof.
**FIGURE-12** represents a perspective view of the perforated cylindrical surface of a large industrial drum provided with a protrusive configuration through the addition of metal, rubber or plastic pieces.
**FIGURE-13** represents a perspective view of the cross section of two protrusions hiding the drum perforations underneath.

**List of component numbers used in the description**

| | | | |
|---|---|---|---|
| 1 | Washing machine | 32-b | Small conical plastic pieces |
| 5 | Drum | 32-c | Small ribs |
| 8 | Large drum perforations | 32-d | Small stainless ribs |
| 9 | Perforated drum surface | 33-a | Corrugated stainless surface |
| 10 | Water tub | 33-b | Corrugated plastic surface |
| 11 | Shaft-bearing | 34 | Sealing gasket |
| 12 | Drum mouth bellow | 35 | Door glass |
| 13 | Door | 36 | Weight protrusion on a sealing gasket |
| 14 | Drum mouth | 37 | Drum-tub water passage space |
| 15 | Drain | 38 | Return to drum |
| 16 | Circulation pump | 38-b | Spray nozzle |
| 17 | Drain pump | 39 | Heating volume |
| 18 | Filter | 40 | Circulation line |
| 19 | Metal sheet coated with plastic-rubber | 41 | Electrical heater |
| 20-a | Small perforations over front-rear cover | 42 | Perforation on a plastic-rubber sheet |
| 20-b | Small perforations over drum cylindrical surface | 43 | Evacuation |
| 21 | Perforations reduced in size | 44 | Water storage tank |
| 22-a | Flat sheeting with small perforations | 45-a | Rib shaped protrusions |
| 22-b | Fabric or pores material | 45-b | Pyramidal protrusions |
| 22-c | Sheeting with slits | 45-c | Conical protrusions |
| 22-d | Bulging sheeting with small perforations | 45-d | Sheet protrusions |
| 23 | Slits | 45-e | Profiled protrusions |
| 24 | Drum locker perforations | 45-f | Individual conical protrusions |
| 25 | Conical locker | 45-g,h | Shaped drum protrusions |
| 26 | Perforated bulging locker | 45-i,j | Ribs added to the drum surface |
| 27 | Bulging protrusions | 45-k | Protrusions having water flow gaps underneath |
| 28 | Bores of a bulge | 46 | Bores |
| 29 | Plastic-rubber coating | 47-a | Front drum cover |
| 30 | Coating width on perforated metal sheet | 47-b | Rear drum cover |
| 31-a | Rib shaped sheeting with small perforations | 48 | Processed material |
| 31-b | Protrusive sheeting with small perforations | 49 | Perforated plastic |
| 31-c | Conically protrusive sheeting with small perforations | 50 | Usual normal size rib |
| 31-d | Protrusive sheet with small perforations | 51 | Small protrusive plastic pieces |
| 32-a | Plastic pieces with small perforations | 52 | Water flow passage beneath the protrusions |

### BRIEF DESCRIPTION OF THE INVENTION

In below descriptions the term "water" is to be understood to cover "liquids and chemical solvents" using in any kind of washing and dry-cleaning machines.

The object of the present invention is to provide a drum washing machine that enables;
- during wet or dry washing processes through the use of a pump that evacuates the water in the space between a drum and a tub by pumping water from tub into the drum, said drum with reduced water permeability and said pump flow-rate capacity of which is higher than that of drained water from the drum to maintain said drum constantly with adequate water level, therefore limiting total water usage in the machine with the required amount of water within the drum, results savings from water to fill the space between the drum and the tub and the empty space of ribs and the balance cells, as well as savings in energy consumption that is required to heat such amount of water and to rotate the drum,
- to enable same material/water ratio to use water for any loading quantity independently from machine capacities to be able to use the machine for loads smaller than usual capacities under same economic conditions.
- to prevent drum perforations damaging delicate textile by means of coating said perforations with a woven fabric,
- to prevent textile being harmed during washing and especially during high speed spinning by a few number of elevated ribs that are applied in large drums, by means of substituting several low and small ribs or protrusions in various shapes for lifting said material,
- to increase physical effect on washed material and to increase water passage through perforation during extraction either through providing the interior surface of a drum with protrusive construction or coating with protrusive material or through attaching pieces so as to obtain protrusions over the perforated surface of said drum,
- to maintain a more homogeneous and balanced distribution of laundry over a cylindrical perforated drum surface during extraction by means of small ribs or protrusions dispersed homogenously thereon and uplifting said material while said drum rotates,
- to prevent damaging of delicate textile during washing by means of permeating the water through said textile while rotating same speed with drum which are spread over several small ribs or protrusions that are provided on the perforated surface during spinning of approximately at distribution speed.
- to increase rubbing effect during a washing by using of storage volume provided in said tub wherein to accumulate water by reducing water level in said drum by means of pausing pump circulation intermittently so augmenting friction between the fabrics and between said fabrics with drum protrusions.
- to provide draining big dirt pieces or dirt pellets especially occurred during washing of materials such as carpet, door/dust mat or mop; through drum perforations, by means of adequate size big holes placed between said protrusions that prevent damages on said materials by said holes.

Water passes through drum perforations and also through drum mouth in front-loading drum washing machines. In a drum of the present invention, water flow through the perforation and drum entrance mouth is restrained in various techniques. Water with limited flow rate draining from said drum into a tub is sucked from underneath the tub by a pump, flow capacity of which is higher than the flow rate of draining water, and flow back into said drum by any way such as from the door or through the interior of the drum shaft or by way of an elastic mouth bellow situated between the tub and the drum, thus enabling a complete evacuation of the water in the space between said drum and said tub even when the drum is full with adequate water for washing. In conventionally designed drums, water passage from a drum is limited by way of reducing the diameter and/or diminishing the number of perforations or by lining with a material which has limited permeability onto the perforated drum surfaces. Said sheeting can be produced from metal, plastic, rubber or a similar substance, or a fabric or a material which although has a homogeneous structure that enables a certain amount of water oozing through its structural pores. The present invention enables to make savings from water, where conventional washing machines fill the volume between a drum and a tub, providing also savings from energy consumption to heat said water and from time to heat such water. Also, since during a washing cycle, there is no water contained inside the external tub, transmission of conduction heat loss from outer surface of the tub decreases. Absence of water outside the drum during washing results energy savings that consumed is in order to rotate the drum. Besides, reducing environmental pollution is another benefit, as savings of water lessens the amount of wastewater contaminated with chemicals.

Various techniques can be employed to provide a protrusive configuration on the surface of perforated sheeting to coat the perforated surface of a drum. There is also the possibility of covering the cylindrical surface of a drum with a lot of pieces made of metal, plastic or rubber by assembling said pieces, so as to provide said surface with a protrusive shape. A configuration which is applied onto a drum surface so as to form a bulge thereon which facilitates water drainage through drum perforations while spinning, a protrusive configuration with protrusions in adequate heights and forms, will also augment physical impact effect on the laundry and provide rubbing effect during a washing cycle. Using small protrusions instead of normal size ribs causes higher drum rotation per same time during washing in order to rotate washing material on the same moving route. More rotation per same time means more physical effect and increase in washing efficiency. Stone washing provides special worn out process on denim fabric products. During stone washing, abrasive material used for said stone effect also abrades drum surfaces. Removable plastic protrusions protect perforated drum surface from said abrasive effect, increase physical friction and rubbing effects thus provide better and more homogeneous washing.

Extraction process begins by distribution; fabrics which spin together with the drum stuck thereon spread onto the protrusions over the surface; as centrifuge force rises, fabrics stretch towards the space in between the protrusions and cause the fibers draw apart, which facilitates the water flow through. Lifted up by said protrusions, fabrics do not block perforations and water extracted from said fabrics can easily reach to said perforations. To prevent damaging of delicate textile during washing, protrusions in smaller size have to be applied. In this case, said protrusions can be made of elastic material. Protrusive pieces may also used to hide drum perforations completely.

Since protrusions in various shapes and sizes dispersed along the entire surface effectuate a lifting function while washing, utilization of additional normal size ribs that are used in conventional machines, becomes unnecessary. In this embodiment, either by applying the lower sized ribs or the absence of normal size ribs in the drum also resolves the laundry damaging problems which arise due to the height of ribs during high speed extraction. By using small size ribs instead of normal usual size ribs, fabrics inside the drum are more homogeneously distributed during washing and extraction processes. Common type high ribs can also used together with small protrusions helping to rotate material. If said protrusions are in the shape of small sized ribs distributed whole drum surface and placed with an angle to the rotation axis or helically shaped they help to move laundry also to same direction with rotation axis, either from back to front or reverse. Said continuous position changing constitutes more homogenous washing process. Several protrusions of various heights as a non-homogenous surface may be used along with small protrusions to facilitate the moving of the material with the drum.

Water in the drum exerts a buffer function between washed materials and reduces the rubbing effect thereof. Washing efficiency can be increased by decreasing water amount, which augments friction and removes dirt from said materials; then increasing water level again, allows to remove dirt by mixing with water. Rubbing the fabrics during a washing process can be repeated several times by increasing and decreasing water amount. If the amount of water is to be decreased, the pump circulating water from the tub into the drum is paused, letting water to store inside the tub or a tank installed either within or outside the tub. When the pump starts running, the drum is refilled with water from the tank. For present invention volume of the space between drum and tub is not important anymore because said volume does not keep water anymore.

In order to control water drainage, the perforated surface of a cylindrical drum can also be coated with an adequate fabric. Another purpose of coating a perforated drum surface with fabric is to form a screen over the perforations to prevent any damage to delicate fabrics which may caused by burrs present inside the holes or the cutting edges thereof.

### DETAILED DESCRIPTION OF THE INVENTION

A drum type wet or dry washing machine (1), wherein the characteristics that constitute the object of the present invention are implemented, comprises the features of claim 1, wherein perforated drum (5) inside a cylindrical tub (10) is provided, as illustrated in Figure-1, which is suitable for front loading and to rotate horizontally or inclined to the rotation axis by means of a shaft-bearing (11) provided on one side in the back or on both sides. In industrial or domestic front-loading washing machines, drum entrance mouth (14) is shut by a door (13), either directly connected to the tub (10), or connected to an outer chassis independent from the tub (10), where an elastic bellow (12) is provided to maintain an integrity with the tub (10) and drum to keep water in the tub. In drums with bearings on both sides, door is provided both in the drum and in the tub in industrial machines. In spite of some differences in size and details, principal components of domestic front-loading machines are similar with industrial washing and dry-cleaning machines. To simplify figures and descriptions, front-loading domestic washers (1) are used in the present application. Embodiments illustrated and described below through domestic type washers can be implemented in all industrial washing machines, both in those with single side bearing and with both sides bearing.

In a washing machine (1) which is object of the invention, in order to prevent keeping any unnecessary water inside the tub, drained water from the drum (5) to the tub (10) is pumped back to the drum (5) during all wet processes by means of a pump (16) while required amount or level of water exists inside the said drum (5) for a particular process. The fulfillment of this condition is possible either by way of providing a pump (16) big enough to pump more water than water drained out from the drum or by implementing various methods to reduce water drainage from the drum so as to correspond to the capacity of the pump employed. If a selected pump (16) has a flow-rate more than water drain-rate from the drum (5), then said pump can evacuate the space (39) between the drum and the tub (10). However, considering the number of drum (5) perforations (8) and diameters of a conventional washer, pump (16) that can handle the drained water flows from drum must be oversized for practical use. Water drainage has to be restricted from the drum during wet processes so a pump (16) can be able to pump back the drained water from the drum (5). Water permeability of a drum (5) can be restrained by means of several methods. Selected method depends on the intended use of the washing machine. Same pump (16) can be used for circulation and evacuation (43); however, if a pump is employed solely for circulation purposes, then a separate pump (17) can be used for evacuation purposes.

The basic method of controlling drum (5) impermeability consists of diminishing permeability of drum perforations (8). If it is a perforated conventional drum, the number and/or diameter of the perforations (8) on the drum (5) have to be reduced. In order to realize the differences between standard perforations and reduced perforations in numbers and sizes are illustrated in Figure-1, wherein Figure-1C shows standard perforations (8) and Figure-1B reduced perforations (20-b). Considering the thickness of stainless metal sheet (9) of a drum (5) which has to be resist the high pressures during extraction, it is tough and uneconomical to punch the small sized perforations (20-b). Small perforations (20-a) can also be placed onto the front (47-a) and/or back (47-b) cover surfaces of drum (5). Apart from reducing the size of perforations (8) on the metal surface (9) of a drum (5), different methods described below can be implemented to restrain water permeability from a drum. The perforated cylindrical surface (9) of a drum (5) can be coated by sheeting (22-a) produced from an adequate material comprised from smaller perforations (21) as illustrated in Figure-2B. Said sheeting (22-a), shown to disclose drum perforations (8) has cut from line (C), can be manufactured from a hard material such as thin stainless metal sheet or a semi rigid material such as plastic or a soft material such as rubber. Coating can be applied directly onto a drum metal sheet (9) permanently or detachably. A coating sheet (22-a) made out of rubber or a plastic material comprises small perforations (21) matching the drum perforations (8). In methods wherein water permeability from a drum (5) is limited by way of small perforations (21), water drainage is continuous and the flow speed thereof may increase under the increased pressure during spinning. Figure-3 reveals that when coating sheet (22-c) is manufactured from an elastic material like rubber, holes of passageways do not necessarily constitute a gap. Perforations can be in the form of slits like "+" as shown on the sample in Figure-3 or may constitute slits (23) in various other forms. Slits (23) prevent water drainage up to a certain pressure level depending on the size thereof depending on the characteristics and thickness of used elastic material; but these slits start opening under the pressure during extraction, letting water drain out of the drum. Such elastic material (22-c) can be fixed directly onto the surface (9) or applied thereon (9) detachably. As shown in detail in Figure-3-A, the back side of the coating sheet is provided with conical protrusions (25). A coating sheet which is mounted by way of said conical protrusions (25) that locked when inserted inside perforations (24) of a drum, can be dismounted from the surface (9) thereon (5) and can be converted into a conventional washer drum (5) or can be altered with different surface coatings (22) as per the scope of application. During evacuation cycle of a cleaning-aimed washing process, water must drain out from the drum (5) through the perforations thereon in order to remove particles, at least partly, which do not dissolve in water. The specific embossed coating sheet (22-d), manufactured from a material such as rubber or plastic shown in Figure-4, that has a fastener system (26) to fix it onto the perforated drum surface from holes which not only well fits to the drum perforations (8) but also have passages through and facilitates drainage from a drum during extraction because of the inclined surface around the small perforations (21) placed on bottom of the hollow (28) between bulging protrusions (27). Bulges (27) may be provided in many different shapes and sizes. For an example, Figure-4 illustrates a coating (22-d) with pyramidal protrusions (27). Another method for reducing drum perforations (8) is disclosed in Figure-6, wherein a perforated metal sheet (19) is directly and entirely coated with rubber or plastic material (29), constituting a thickness (30) that reduces (42) the size of large perforations of a metal sheet (8-b). Perforations, reduced in size (42) through coating of the metal sheet (19) can be mounted onto the perforated sheet (9) of a drum. The surface of the material (29) used in coating said metal sheet (19) can be shaped like the coating disclosed in Figure-4 (22-d) with different shaped and sized bulging protrusions (27).

Another benefit of coating a perforated metal sheet (9 or 19) with a material (29) such as plastic or rubber is the prevention of damages that caused by perforations (8) to delicate laundry. Since the edges of perforations (42) of plastic or rubber material (29) cannot be as sharp as those of stainless metal sheet, laundry will not be damaged during rubbing.

One other method to achieve restrained water drainage from the drum (5) is applying a coating onto a perforated surface (9) with sheeting made by a lasting textile or compressed fibers or sheeting out of a porous rubber or plastic material or some similar substance (22-b), as illustrated in Figure-2A. A textile can be employed for this purpose, said textile densely woven with a synthetic fiber to enable the required amount of water drainage. There is also the possibility of employing sheeting (22-b) constituted with fibers fixated together in a way that permits a limited amount of water to pass through or sheeting (22-b) with some spongeous plastic or rubber that enables limited drainage through the pores therein. In conventional drums during a washing process, fine and delicate textile worn out through perforation (8) edges, even penetrating inside, and can be damaged by the sharp edges of said perforations (8) or by the burrs formed therein. Another advantage of coating the surface with a textile (22-b) or with some other water permeable substance is to prevent the drum perforations (8) to damage laundry by way of stopping all contacts between said perforations (8) and said textile.

When water drains out from a drum (5) just through a textile or water permeable material sheeting (22-b), particles that should be removed together with water may remain inside because said sheeting (22-b) functions like a filter that permits the flow of water only. This problem can be resolved through providing the drum (5), in addition to a water permeable textile coating (22-b), drum front (47-a) and/or back (47-b) cover surfaces are provided with small perforations (20-a), then particles suspended in water can be discharged from the drum (5) during all of the wet cycles; therefore, during extraction, particles do not cause a trouble when water pass through the textile (22-b) or through the fissured elastic coating (22-c) or through any other water permeable substance (22-b) covering the cylindrical surface (9). Selecting a method may vary by use purpose of a washing machine (1), and in some cases different methods can be combined in the same drum (5).

A second passage from the drum towards the tub is through the drum mouth (14). As demonstrated in the detail frame (Figure-1-A), there is a space between the immovable tub (10) and the rotary drum (5), wherein water can flow without obstruction. Water drainage through said opening (37) also needs to be reduced however it is not necessary to obstruct completely. Figure-1-A illustrates a method wherein a gasket (34) is mounted over a drum mouth (14) in order to restrain water drainage at low speed rotations of the drum by way of exerting pressure onto the door (13) glass (35) or onto an adequate surface over the tub neck by the pressure of water and laundry onto the gasket. During extraction, centrifugal force increasing firstly lessens the exert of pressure force applied by gasket onto glass (35) or surface, later on separates the gasket (34) and surface (35) completely from each other by effect of high spinning rotation speed on gasket and weight protrusion (36). Fan air flow occurred by the rotation of the drum (5) helps this separation. This prevents said gasket (34) from any damage due to friction at high peripheral speeds. Besides this particular method given as example, various other known passage diminishing methods can also be employed to restrict water drainage, depending on door and drum types.

As illustrated in Figure-1, a restrained amount of water draining from the drum (5) into the tub (10) is pumped from an outlet (15) beneath of said tub and returned to the drum (38) by means of a pump (16). Said pump (16) functioning by the principle of low pressure-high flow-rate, the amount of water inside a tub (10) either can be maintained at a desired minimum level or can be completely evacuated through the selection of a pump (16) that possesses a flow-rate higher than the rate of drained water out from a drum (5). In order to keep water amount at desired level, pump (16) flow-rate can be regulated either by running the pump in an on-off manner operated by water level monitoring system or by changing motor speed of the pump through an inverter unit. For heating water, volume (39) beneath the tub wherein an electrical heater (41) or a steam jet is provided, should be filled with water throughout heating cycles. Outside these cycles while washing and rinsing, all water has to be in the drum (5) except the necessary amount which allows proper functioning of the pump (16). Installing a steam injection or electrical heat resistance or any kind of heat exchangers on the circulation system is another way to heat water. If requested, a filter (18) can be provided over the circulation line (40) to separate unsolved particles in the liquid. Adding the chemicals to the washing liquid before the circulation line (40) and the pump (16) provides a more homogeneous mixture. Heating up the tub liquid via steam injection to the circulation line (40) or through a heat exchanger provided on the circulation line eliminates the need for an extra heating apparatus and volume.

A spray nozzle (38-b) arranged on the circulation line (40) at the drum inlet, as shown in Figure-5, can regulate the route the incoming water, spraying water onto laundry (48) during washing, and augments washing and rinsing efficiency. The circulation pump (16) is stopped at the end of wet processes, and water is evacuated either through the evacuation line (43), or using a separate evacuation pump (17) upon request. In domestic type washing machines, a pump (16) used for circulation purposes can also be employed for evacuation purposes. For this purpose a valve system mounted at the pump (16) outlet is used to direct water towards the drum (5) or the evacuation line (43). Both pumps (16 and 17) can be employed simultaneously for circulation purposes.

As water amount is reduced inside a drum (5) during wet processes like washing and rinsing, physical friction increases between washed materials (48), providing a better rubbing thereof. To enable this, a volume (44) inside the tub (10) as shown in Figure-5 or outside the tub, can be used to store drum water. During washing, the pump (16) is stopped and most of the water inside the drum (5) is stored to the said volume (44). Thus, as water is stored inside the tank, drum (5) water is lessened and rubbing effect augments. Water in the tank (44) can be pumped back into the drum (5) by re-operating the pump (44) to remove dirt from laundry. Repeating this process at intervals will increase physical wash efficiency.

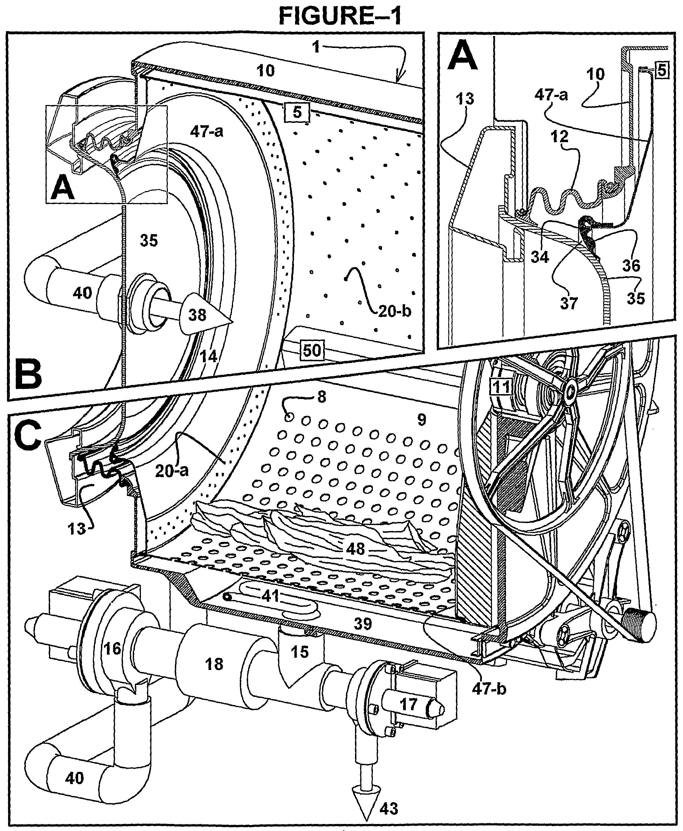

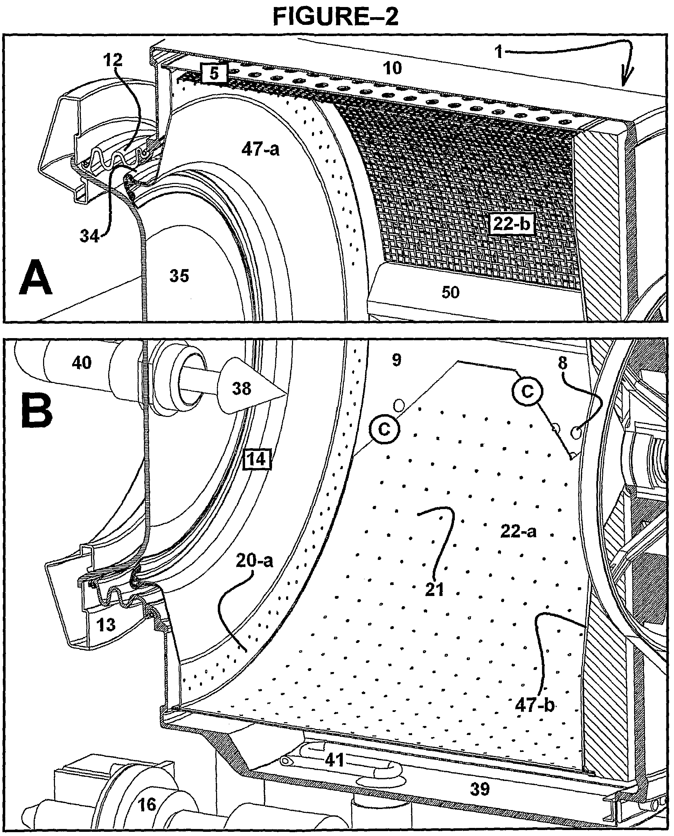

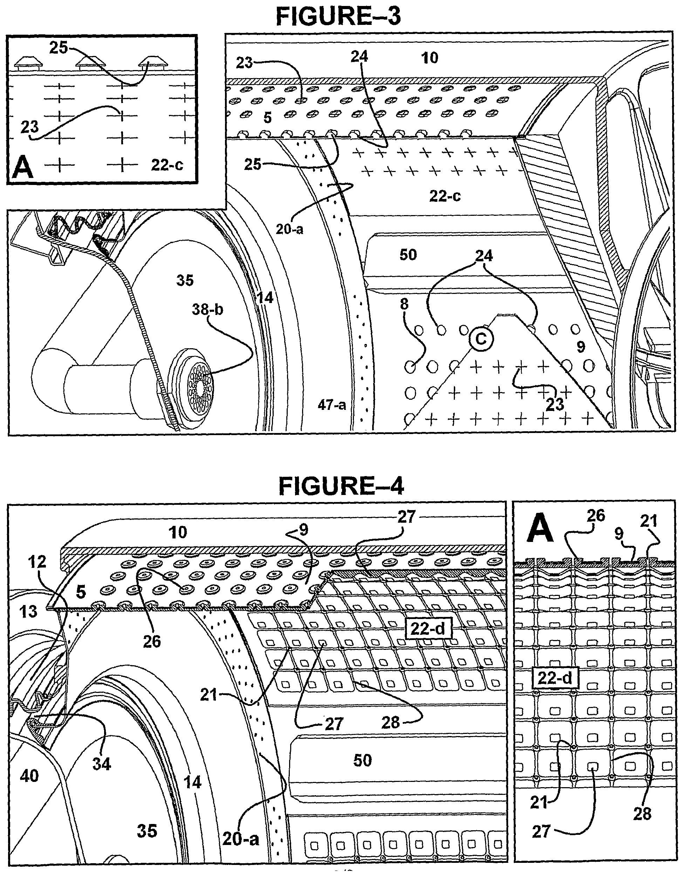

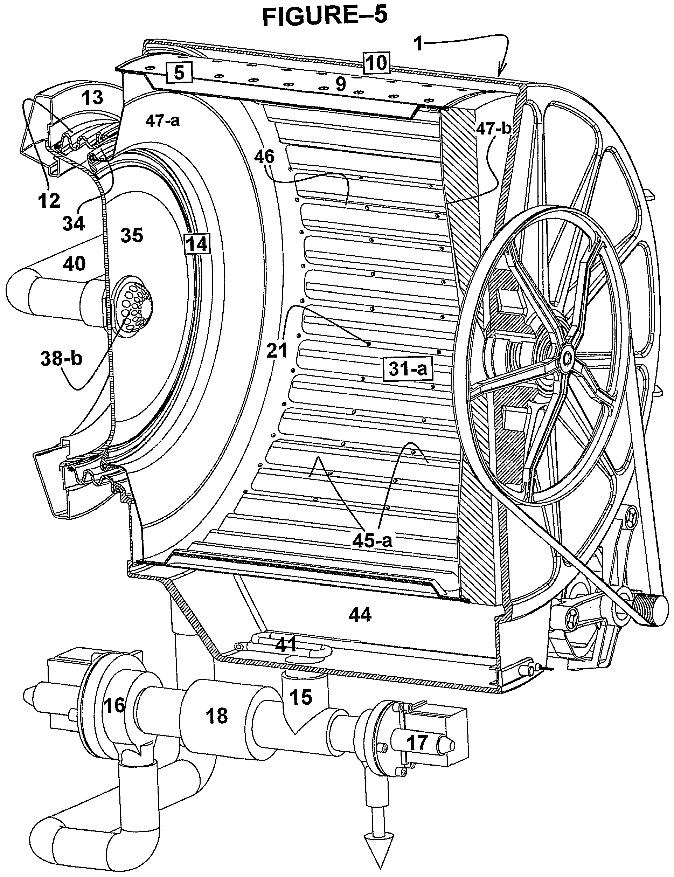

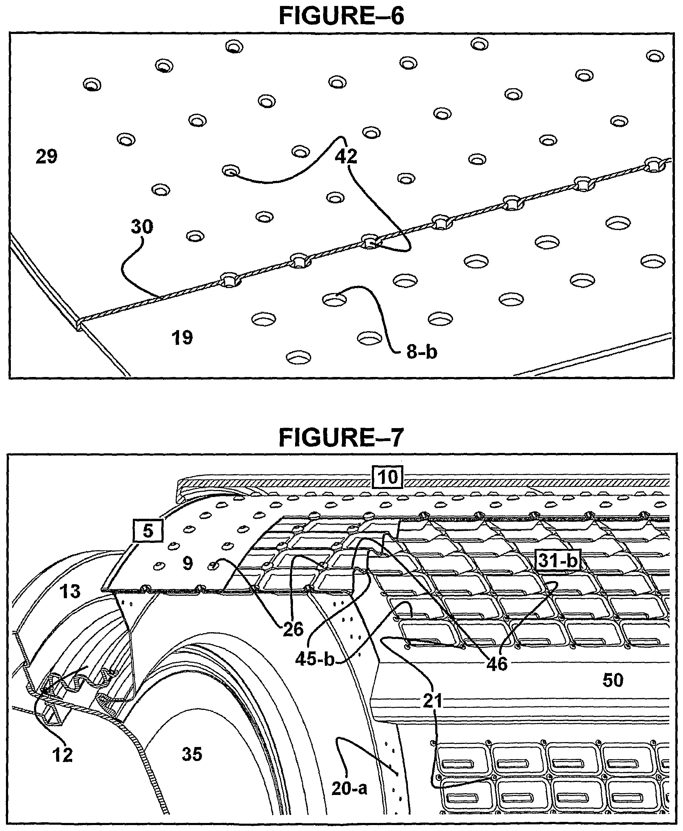

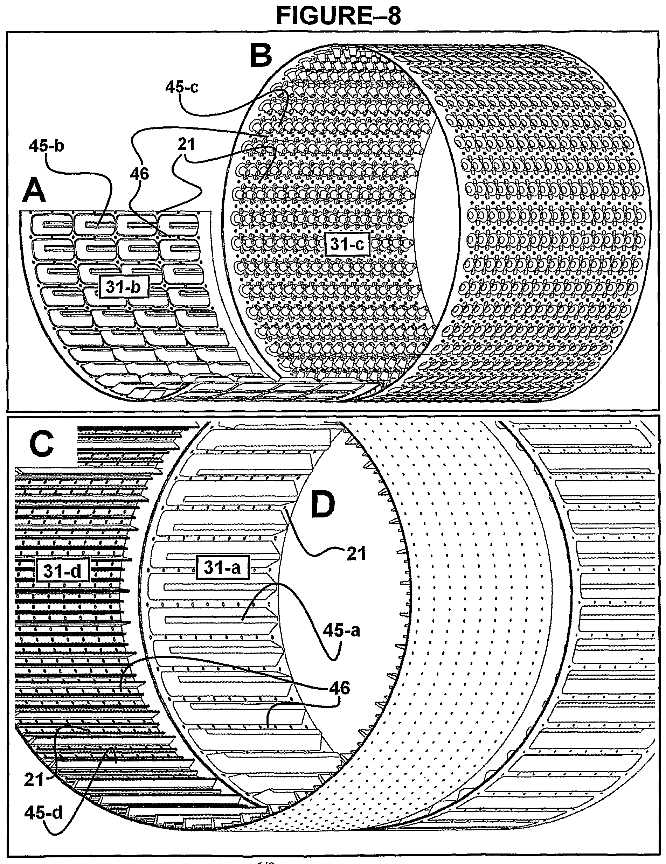

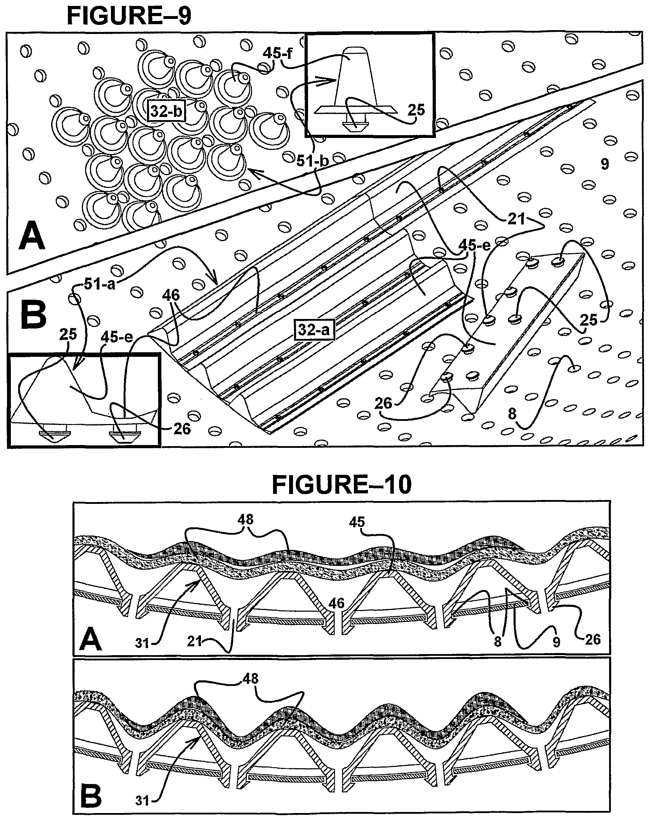

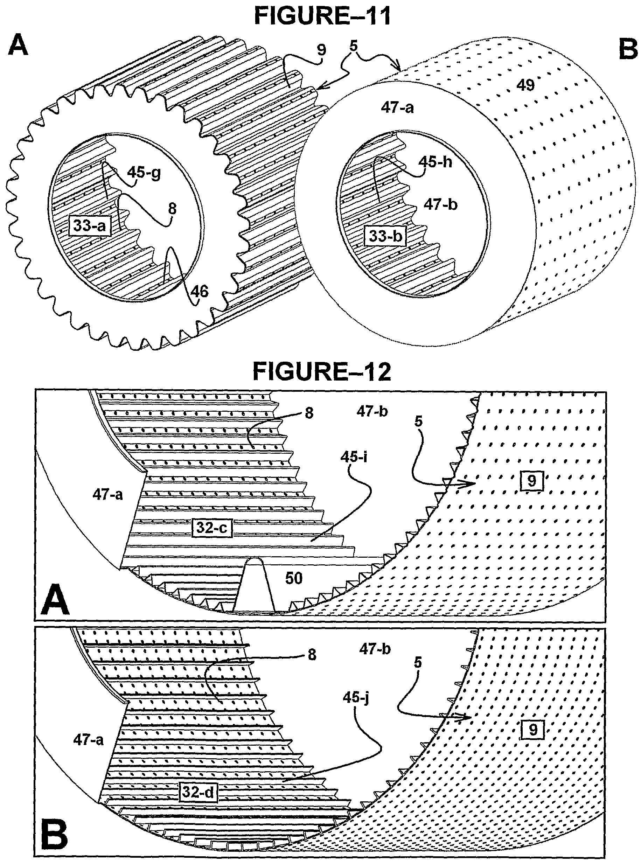

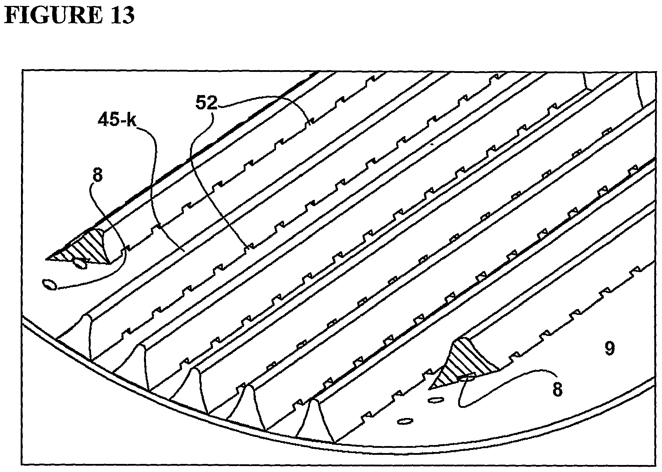

As illustrated in Figure-7, coating of the cylindrical surface (9) of a drum (5) with plastic, rubber or similar substance (31-b), augments physical effects in washing cycles and also extraction efficiency, said coating comprises from a perforated (21) surface with distinctly protrusions (45-b) in different shapes and sizes. In the embodiment shown in Figure-7, a coating sheet (31-b) applied onto the perforated surface (9) of a drum (5) for shaping purposes, restrains at the same time water drainage as conical lockers (26), which are fixed through the drum perforations in order to lock said material (31-b) onto the surface (9), comprise perforations (21) in the middle which are smaller than drum perforations (8). Coating sheet (31-b) shown in Figure 7 is applied onto a drum surface (9) in a demountable manner but can also be fixed permanently. There is also the possibility of coating a perforated drum surface (9) with a substance produced by several flexible pieces (Figure-8A) that can be assembled together to constitute a cylinder or in one single piece (Figure-8B,C,D) that can be shaped as a cylinder for mounting onto said drum (5). By providing in adequate size, shape, and quantity of protrusions (45) which cover the cylindrical surface (9) of a drum (5) can rotate and lift up the laundry (48) inside said drum without necessitating the use of normal size lifter ribs (50), which are currently employed in horizontal washing machines. Such drum surface will have the configuration as disclosed in Figure-5, wherein there is a large number of ribs or protrusions (45-a) but shorter and smaller size than conventional ribs (50). These small-sized ribs can be applied onto a drum surface in the form of a coating sheet (31-a) or mounted thereon separately (32) or in groups. The number of ribs (50) is generally 3 to 4 in conventional washing machines, sometimes 6 or maximum 8 in large-capacity ordinary industrial machines, whereas in the embodiment of this invention, small ribs (45-a) or similar protrusions (45-b, c, d) which substitute beaters (50) of conventional washing machines, are much greater in numbers. While the height of a rib (50) employed in a conventional drum (5) corresponds to at least approximately 6% of said drum diameter, the height (45) of a protrusion cited in the present invention corresponds to maximum approximately 6% thereof. Said protrusions are higher than the smooth protrusions functioning to form bulge surface which some of the producers applied on their drums using together with normal ribs. Besides, as can be seen in Figure-5 and Figure-8-D, these protrusions (45) are not necessarily shaped as conventional ribs (50). Said protrusions may come into various shapes (45-b, d) and sizes, as illustrated in Figure-8-A, C. Furthermore, said protrusions (45-c) can be configured completely different from conventional and can be numerous (31-c) as illustrated in Figure-8-B. Drum surface shapes can be implemented either as demonstrated in Figure-8 through shaping the coating that covers the perforated cylindrical surface (9) of a drum (5) or by way of mounting pieces (51), as in Figure-9, through various methods directly onto the perforated cylindrical surface (9) of said drum (5) to form similar view as shown in Figure-8. Providing protrusions (45) from small pieces (51) can be a more convenient solution particularly in industrial type washing machines wherein a drum is too large to be covered with a single-piece coating material (31). Installation of protrusive pieces (51) produced from a material like plastic or rubber, is achieved by inserting said pieces inside the perforations (8) over the perforated metal sheet (9) of a drum (5) and locking by imperforated (25) and/or perforated (26) conical protrusions, as illustrated in two different embodiments in Figure-9, or completely different installation method used for mounting of said pieces. Protrusive shaped profile (51-a) pieces those completing each other by gathering when they mounted over the drum sheet as shown in Figure-9-B, enables shaping (32-a) of the interior of a drum (5) with protrusions (45-e) and also covering large drum (5) perforations (8) with smaller perforations (21). When necessary, protrusions (45-e) can be altered as shape, density, plurality, size and also number and diameter of its perforations (21), just by changing the pieces (51-a). Pieces (51) installed inside a drum (5) may be in various shapes and sizes. Figure-9-A illustrates an embodiment wherein conical protrusions (45-f) are mounted separately (51-b). If said pieces (51-b) are fixed directly onto the perforations (8), the drum (5) will have an appearance (32-b) as disclosed in Figure 8-B. Another advantage of using small pieces (51) is that these pieces (51) can be replaced when worn out or broken over in time. Restraining water drainage and shaping drum surface (32-b) can both be accomplished at the same time if protrusions (51-b) are fixed onto a drum surface one by one as shown in Figure-9-A after applying thereon a perforated surface coating (22-a) as illustrated in Figure 2-B, said coating which reduces the size of perforations over said drum surface. Protrusive drums (5) which are not equipped with normal size ribs (50) perform better distribution (48), thus provide better washing effect and reduce load impacts on the motor during washing. The coating (31) shown as sectional schematic view in Figure-10 can be manufactured of a rigid or an elastic material at desired thickness. Said coating can be fixed permanently onto a drum metal sheet (9) or attached thereto (9) through the perforations (8) by means of inserted locking method (26). As shown in Figure 13, drum perforations are seen from the cross section of the protrusive parts (45 -g) and those protrusive parts (45-g) are placed so as to cover the drum perforations; a passage (52) located underneath the protrusive parts and corresponding to the drum perforations provides a passage of water coming from the drum to the drum perforations. Hiding the perforations underneath the protrusions prevents the contact of a delicate material to the drum perforations.

At the end of distribution, textile (48) settles on top of protrusions (45) as shown in Figure-10-A and starts stretching towards the hollows (46), under the pressure of increasing centrifugal force by increasing extraction speed. Such stretching enables water to squeeze out from in-between thread fibers, clears the way for water passage, and facilitates water to pass through said fabrics before attaining the perforations. Whereas, in conventional washing machines, during extraction, centrifugal force increases as drum rotation speed increase, that causes proportional compression on textile placed over a drum surface (9) and said textile blocks both water passage through textile and drum perforations that are obstructed by textile (8). Supplying protrusions (45) at adequate height and density will keep laundry away from perforations (21) by spreading over protrusions during washing and extraction cycles. Water will easily reach the perforations (21) and drain out from the drum (5) because fabrics (48) will not be able to block said perforations. In such drums, as demonstrated in Figure-5, perforations (21) may be fewer in numbers but larger in diameters. In case of an appropriate construction of protrusions and canals in between, there is no necessity of placing perforations on a cylindrical surface, placing of these perforations (20-a) onto the front and/or back cover sheet (47) of a drum as in the same level with cylindrical surface by corresponding to said canals would be sufficient to let water to drain out. Since, during extraction, removed water from laundry, finds its way to the perforations without facing any obstruction in the hollows (46) between the protrusions, required time to attain the desired humidity level is also reduced. Figure-11-A shows another embodiment to be applied to smaller drums (5) to configure (33) said drum surface, wherein a perforated metal sheet (9) is first undulated and then given the shape (33-a) of a drum (5) in such a way that drum perforations (8) which formed in different sizes and shapes look like all aforementioned examples, placed inside the hollows (46) and these small ribs (45-g) shall be formed homogenously over the entire surface. The drum disclosed in Figure-11-B may be fabricated partially or totally from a plastic material. When the perforated surface of a drum is made of a plastic material, the drum interior of the drum can be manufactured with a protrusive (45-h) surface (33-b) and the exterior with a cylindrical surface (49) as shown in Figure-11-B. Coating a perforated metal sheet totally with some large-pieced materials (31) might be applied easily in small washing machines, but in larger machines represented in Figure-12, a handy application by using of small ribs (45-i, j) on the perforated metal sheet in between the drum perforations (8) could be better solution. If stainless steel used, said ribs (45-i) can be fixed onto the drum or welded directly over the perforated sheet (9). In cleaning-purposed washing machines wherein water level is low, sufficient number of small ribs (45) can rotate washing material alone but will not be sufficient to rotate the entire floating material in machines wherein water level is higher. Normal size ribs (50) are also required in this case in addition to said small ribs (45), as can be observed in Figure-12-A. Sizes, shapes, and densities of protrusions (45) in side the drum must be provided to prevent any damages on the textile (48). Protrusions (45), employed in drums of industrial type stone washing machines, a washing process that literally uses abrasive material like pumice stones to wear out fabrics, not only increase the physical effect of "stone washing" on treated denim fabrics and accelerate a worn-out appearance thereof, but also prevent said stones to rub the perforated metal sheet (9) and contribute the lengthening of lifetime of said drum. (9). Stainless cutting-edge (45-j) protrusions are applied to a drum that performs stone-washing by means of either welding directly onto said drum or in an detachable way, as shown in Figure-12-B. Various shaped pieces, produced from plastic or rubber and comprise high resistance to abrade, may also be substituted to stainless material and mounted likewise onto said drum. Employing plastic pieces (51-a, b) in stone-washing drums, illustrated as example in Figure-9, augment physical effect and prevent at the same time the wearing out of drum sheet (9). In time, protrusions (51) which worn out under the abrasive effect of stones, can be replaced with new ones (51).

## Claims

1. A washing-extraction machine (1) comprising:
a liquid tub (10) positioned either horizontally or inclined with the horizontal,
a perforated drum (5), which rotates in the liquid tub (10) around a shaft-bearing system (11),
**characterized in that**
a cylindrical surface (9) of the perforated drum (5) is provided with a ribbed constitution in order to obtain a surface with dense protrusions (45) and hollows (46) in various shapes and sizes;
**in that** the height of said protrusions (45) is less than 6% of the diameter of said drum (5);
wherein the protrusions (45) on the cylindrical surface of said drum (5) are placed side by side to constitute hollows (46) in between thereof; and
wherein the drum perforations (21) provided on the cylindrical surface (9) of said drum (5) are arranged in the hollows (46) between said protrusions (45), and wherein said protrusions (45) are adequately elevated and densely provided such that laundry that is stretched towards the hollows between the protrusions (45) will not reach to block the perforations (21).

2. A machine as claimed in Claim 1, **characterized in that** said protrusions (45) are solely sufficient enough to move the materials being washed along with the drum (5).

3. A machine as in Claim 1, **characterized in that** a metal sheet which constitutes the cylindrical surface (9) of said drum (5) is undulated (33-a) with corrugated indents and protrusions (45-g).

4. A machine as in Claim 1, **characterized in that** the cylindrical surface (9) of said drum (5) is manufactured of a plastic material (33-b) having undulated shape with indents and protrusions (45).

5. A machine as in Claim 1, **characterized in that** a coating (31) formed undulated on the cylindrical surface (9) of said drum (5) comprises of a single piece (31- a, b, c) or several pieces (31-b) fixed permanently or detachably on the surface.

6. A machine as in Claims 1 to 5, **characterized in that** said protrusions (45) are provided on the cylindrical surface of said drum (5) either solely in lieu of normal size ribs (50) or in addition to conventional normal size ribs (50).

7. A machine as in Claims 1 to 6, **characterized in that** said protrusions (45) are arranged over the entire interior surface of said drum (5) in the form of small ribs (45- a d, e, g, h, i, j).

8. A machine as in Claim 7, **characterized in that** said small size ribs (45) are placed onto the said drum (5) surface with an angle with rotation axis or in helical form to move laundry in the same direction of rotation axis, either from back to front or reverse, during drum rotation.

9. A machine as in Claim 7, **characterized in that** said small size protrusions (45) are placed over the surface of said drum (5) to completely cover the drum perforations (21) however to allow the flow of liquid underneath gap to reach the drum perforations.

10. A machine as in Claim 7, **characterized in that** said protrusions (45) are regionally elevated in various heights to form non-homogeneous surface shape that helps to lift up the material up.

11. A machine as in Claim 1, **characterized in that** the drum perforations (21) are sized so as to allow the large dirt pieces or pellets leave the drum.

12. A machine as in Claim 1, **characterized in that** the drum perforations (21) are sized small enough to reduce liquid permeability of the drum.

13. A machine as in above Claims,
**characterized in that** a pump (16) is provided to be operated under control mounted onto a circulation line (40) that while a required level or amount of liquid for washing or rinsing is provided in the drum (5) enables to decrease the level of tub liquid or to keep the level of the tub liquid at desired level or to evacuate the tub liquid completely when needed,
wherein tub liquid that exists in a volume (39) between said drum (5) and tub (10) and that drains from the drum (5) into the tub (10) is sucked from tub (10) in order to pump said liquid back to the drum (5), wherein
said pump (16) has a higher flow-rate capacity than drain rate of liquid from said drum (5) into the tub (10); and **in that**
permeability of said drum (5) is restrained to enable the pump (16) to change the level or to keep the level of tub liquid in the volume (39) between the tub (10) and the drum (5) as desired or to evacuate said tub liquid completely when requested by the said pump (16),
wherein the quantities and sizes of said drum perforations (20) are provided in such a way that the drain rate of the liquid from said perforations is less than the flow rate of the pump (16) which is used to pump the liquid back into the drum (5).

14. A machine as in Claim 13, **characterized in that** said circulation line (40) is accessing into said drum (5) through a door (35) or a drum-tub mouth bellow (12) or a drum shaft (11).

15. A machine as in Claim 13, **characterized in that** chemicals are added to the washing liquid before the circulation line (40) and before the pump (16) is operated; tub liquid is heated be means of steam injector or a heat exchanger on the circulation line (40) and the particulates in the circulation liquid are filtered through a filter (18).

16. A machine as in Claim 13, **characterized in that** in said drum (5) number and/or sizes of liquid passage perforations (20) of the drum (5) effecting said drum permeability, are reduced compared to conventional drums.

17. A machine as in Claim 13, **characterized in that** in order to restrain the permeability of said drum (5), perforated surfaces (9) of said drum are coated with a permanent or detachable material to limit water flow and that shapes, quantities and sizes of said coating (22) perforations (21) are provided in a way to provide the drain rate of the liquid from said perforations is less than the flow rate of the pump (16) which is used to pump the liquid back into the drum (5).

18. A machine as in Claim 17, **characterized in that** said coating (22) is manufactured of various material like rubber, plastic, metal, woven or any other material having limited liquid permeability due to its porous structure.

19. A machine as in Claim 18, **characterized in that** said rubber, plastic or similar surface coating (22-d) comprises bulgy parts (27) of various shapes and sizes in between said perforations (21).

20. A machine as in Claim 18, **characterized in that** small slits (23) corresponding to drum perforations (8), without leaving any space there between are provided on the said rubber or plastic coating.

21. A machine as in Claim 13, **characterized in that** in order to restrict liquid permeability of said drum (5) the passage (37) around the drum mouth (14) to the tub (10) is covered with a suitable sealing gasket (34).

22. A machine as in Claim 21, **characterized in that** said gasket (34) is mounted onto the drum mouth (14) to rotate with said drum (5), and by touching either specific surface of the tub or the tub door (13) or a suitable surface (35) in order to restrain the liquid passage way and if desired said gasket (34) is provided with a weight protrusion (36) to decrease or totally eliminate pressure caused by centrifugal force exerted during extraction.

23. A machine as claimed in above Claims, **characterized in that** the parts used over the perforated surface (9) of said drum are configured to constitute a profile (45-e) including protrusions (45) and also the hollow zone (46), said profile covering drum perforations (8) as well; and bores (21) in the hollow zone (46) matching with drum perforations, in less numbers and/or smaller in diameters than perforations of conventional drums for reducing liquid permeability of the drum.

24. A washing and rinsing process in a washing machine as claimed in Claims 1 to 13, **characterized in that** in order to prevent any harm to delicate materials; while the drum rotates faster than its distribution speed, circulation liquid is transmitted throughout the textile which is spread onto the protrusions placed on the drum surface.

## Patentansprüche

1. Wasch- und Schleudermaschine (1), welche aufweist:
eine Flüssigkeitswanne (10), die entweder horizontal oder zu der Horizontalen geneigt angeordnet ist,
eine perforierte Trommel (5), die sich in der Flüssigkeitswanne (10) um ein Wellenlagersystem (11) dreht, **dadurch gekennzeichnet, dass**
eine zylindrische Oberfläche (9) der perforierten Trommel (5) mit einer gerippten Ausgestaltung versehen ist, um eine Oberfläche mit dichten Vorsprüngen (45) und Vertiefungen (46) in verschiedenen Formen und Größen zu erhalten, und
dass die Höhe der Vorsprünge (45) weniger als 6 % des Durchmessers der Trommel (5) beträgt,
wobei die Vorsprünge (45) auf der zylindrischen Oberfläche der Trommel (5) nebeneinander angeordnet sind, um dazwischen Vertiefungen (46) zu bilden,
wobei die Trommelperforationen (21), die auf der zylindrischen Oberfläche (9) der Trommel (5) vorgesehen sind, in den Vertiefungen (46) zwischen den Vorsprüngen (45) angeordnet sind, und
wobei die Vorsprünge (45) ausreichend erhöht und auf eine solche Weise dicht vorgesehen sind, dass die Wäsche, die zu den Vertiefungen (46) zwischen den Vorsprüngen (45) gestreckt ist, es nicht schaffen wird, die Perforationen (21) zu blockieren.

2. Wasch- und Schleudermaschine nach Anspruch 1, **dadurch gekennzeichnet, dass** die Vorsprünge (45) nur ausreichend genug sind, um die mit der Trommel (5) gewaschenen Materialien zu bewegen.

3. Wasch- und Schleudermaschine nach Anspruch 1, **dadurch gekennzeichnet, dass** ein die zylindrische Oberfläche (9) der Trommel (5) bildendes Metallblech mit gewellten Einbuchtungen (33-a) und Vorsprüngen (45-g) gewellt ist.

4. Wasch- und Schleudermaschine nach Anspruch 1, **dadurch gekennzeichnet, dass** die zylindrische Oberfläche (9) der Trommel (5) aus einem plastischen Material (33-b) mit einer wellenförmigen Form mit Einbuchtungen und Vorsprüngen (45) hergestellt worden ist.

5. Wasch- und Schleudermaschine nach Anspruch 1, **dadurch gekennzeichnet, dass** eine Beschichtung (31), die auf der zylindrischen Oberfläche (9) der Trommel (5) gewellt ausgebildet worden ist, ein einziges Teil (31-a, b, c) oder mehrere Teile (31-b) aufweist, die dauerhaft oder lösbar an der Oberfläche befestigt sind.

6. Wasch- und Schleudermaschine nach den Ansprüchen 1 bis 5, **dadurch gekennzeichnet, dass** die Vorsprünge (45) auf der zylindrischen Oberfläche der Trommel (5) entweder nur anstelle der Rippen (50) normaler Größe oder zusätzlich zu den herkömmlichen Rippen (50) normaler Größe vorgesehen sind.

7. Wasch- und Schleudermaschine nach den Ansprüchen 1 bis 6, **dadurch gekennzeichnet, dass** die Vorsprünge (45) über die gesamte innere Oberfläche der Trommel (5) in Form von Rippen (45-a, d, e, g, h, i, j) kleiner Größe angeordnet sind.

8. Wasch- und Schleudermaschine nach Anspruch 7, **dadurch gekennzeichnet, dass** die Rippen (45) kleiner Größe auf der Oberfläche der Trommel (5) in einem Winkel mit einer Drehachse oder in einer spiralförmigen Gestalt angeordnet sind, um die Wäsche in derselben Richtung der Drehachse während der Trommeldrehung entweder von hinten nach vorne oder entgegengesetzt zu bewegen.

9. Wasch- und Schleudermaschine nach Anspruch 7, **dadurch gekennzeichnet, dass** die Vorsprünge (45) kleiner Größe über der Oberfläche der Trommel (5) angeordnet sind, um die Trommelperforationen (21) vollständig zu bedecken und um jedoch dem Flüssigkeitsstrom unterhalb des Spalts zu ermöglichen, die Trommelperforationen zu erreichen.

10. Wasch- und Schleudermaschine nach Anspruch 7, **dadurch gekennzeichnet, dass** die Vorsprünge (45) in verschiedenen Höhen örtlich begrenzt angehoben sind, um eine nicht homogene Oberflächenform zu bilden, die dazu beiträgt, das Material hochzuheben.

11. Wasch- und Schleudermaschine nach Anspruch 1, **dadurch gekennzeichnet, dass** die Trommelperforationen (21) auf eine solche Weise bemessen sind, dass die großen Schmutzstücke oder die Tabletten die Trommel verlassen können.

12. Wasch- und Schleudermaschine nach Anspruch 1, **dadurch gekennzeichnet, dass** die Trommelperforationen (21) klein genug bemessen sind, um die Flüssigkeitspermeabilität der Trommel zu verringern.

13. Wasch- und Schleudermaschine nach den oben genannten Ansprüchen, **dadurch gekennzeichnet, dass** eine Pumpe (16) vorgesehen ist, die mittels einer Steuerung betrieben wird, die unter einer Umwälzleitung (40) angebracht ist, die in der Trommel (5) einen erforderlichen Pegel oder eine Menge an Flüssigkeit zum Waschen oder Spülen bereit stellt, wobei die Pumpe (16) es ermöglicht, die Wannenflüssigkeit oder den Pegel der Wannenflüssigkeit auf dem gewünschten Pegel zu halten oder die Wannenflüssigkeit vollständig zu leeren, wenn es nötig ist,
wobei die Wannenflüssigkeit, die in einem Volumen (39) zwischen der Trommel (5) und der Wanne (10) vorhanden ist und die von der Trommel (5) in die Wanne (10) abläuft, von der Wanne (10) abgesaugt wird, um die Flüssigkeit zurück zu der Trommel (5) zu pumpen,
wobei die Pumpe (16) eine höhere Kapazität der Flussrate als die Abflussrate der Flüssigkeit aus der Trommel (5) in die Wanne (10) aufweist,
wobei die Permeabilität der Trommel (5) eingeschränkt ist, um es der Pumpe (16) zu ermöglichen, den Pegel zu ändern oder den Pegel der Wannenflüssigkeit in dem Volumen (39) zwischen der Wanne (10) und der Trommel (5) wie gewünscht zu halten oder um die Wannenflüssigkeit vollständig zu leeren, wenn dies von der Pumpe (16) angefordert wird, und
wobei die Mengen und die Größen der Trommelperforationen (20) auf eine solche Weise vorgesehen sind, dass die Abflussrate der Flüssigkeit aus den Perforationen geringer als die Flussrate der Pumpe (16) ist, die verwendet wird, um die Flüssigkeit zurück in die Trommel (5) zu pumpen.

14. Wasch- und Schleudermaschine nach Anspruch 13, **dadurch gekennzeichnet, dass** die Umwälzleitung (40) durch eine Tür (35) oder einen Mündungsbalg (12) der Trommelwanne oder eine Trommelwelle (11) in die Trommel (5) eingreift.

15. Wasch- und Schleudermaschine nach Anspruch 13, **dadurch gekennzeichnet, dass** der Waschflüssigkeit vor der Umwälzleitung (40) und vor der Betätigung der Pumpe (16) Chemikalien zugesetzt werden, wobei die Wannenflüssigkeit auf der Umwälzleitung (40) mit einem Dampfeinspritzventil oder einem Wärmetauscher erwärmt wird und die Teilchen in der Umwälzflüssigkeit durch einen Filter (18) gefiltert werden.

16. Wasch- und Schleudermaschine nach Anspruch 13, **dadurch gekennzeichnet, dass** in der Trommel (5) die Anzahl und / oder die Größen der Flüssigkeitsdurchgangsperforationen (20) der Trommel (5), welche die Permeabilität bewirken, im Vergleich zu den herkömmlichen Trommeln verringert ist.

17. Wasch- und Schleudermaschine nach Anspruch 13, **dadurch gekennzeichnet, dass** zur Begrenzung der Permeabilität der Trommel (5) perforierte Flächen (9) der Trommel mit einem permanenten oder abnehmbaren Material beschichtet sind, um den Wasserfluss zu begrenzen, und dass die Formen, die Mengen und die Größen der Beschichtung (22) und der Perforationen (21) auf eine solche Weise vorgesehen sind, dass die Abflussrate der Flüssigkeit aus den Perforationen geringer als die Flussrate der Pumpe (16) ist, die verwendet wird, um die Flüssigkeit zurück in die Trommel zu pumpen (5).

18. Wasch- und Schleudermaschine nach Anspruch 17, **dadurch gekennzeichnet, dass** die Beschichtung (22) aus verschiedenen Materialien wie zum Beispiel einem Gummi, einem Kunststoff, einem Metall, einem Gewebe oder irgendeinem anderen Material hergestellt worden ist, das aufgrund seiner porösen Struktur eine begrenzte Flüssigkeitspermeabilität aufweist.

19. Wasch- und Schleudermaschine nach Anspruch 18, **dadurch gekennzeichnet, dass** die Gummi-, Kunststoff- oder ähnliche Oberflächenbeschichtung (22-d) zwischen den Perforationen (21) mikroskopische Teile (27) unterschiedlicher Formen und Größen aufweist.

20. Wasch- und Schleudermaschine nach Anspruch 18, **dadurch gekennzeichnet, dass** an der Gummi- oder Kunststoffbeschichtung kleine Schlitze (23) vorgesehen sind, die den Trommelperforationen (8) entsprechen, ohne irgendeinen Raum dazwischen zu lassen.

21. Wasch- und Schleudermaschine nach Anspruch 13, **dadurch gekennzeichnet, dass** zur Begrenzung der Flüssigkeitsdurchlässigkeit der Trommel (5) der Durchgang (37) um die Trommelmündung (14) zur Wanne (10) mit einer geeigneten Dichtung (34) abgedeckt ist.

22. Wasch- und Schleudermaschine nach Anspruch 21, **dadurch gekennzeichnet, dass** die Dichtung (34) an der Trommelmündung (14) angebracht ist, um sich mit der Trommel (5) zu drehen, und dass durch ein Berühren entweder einer bestimmten Oberfläche der Wanne oder der Wannentür (13) oder einer geeigneten Oberfläche (35) es vorgesehen ist, den Durchgangsweg der Flüssigkeit zurückzuhalten, und dass, falls dies gewünscht ist, die Dichtung (34) mit einem Gewichtsvorsprung (36) versehen ist, um den Druck zu verringern oder vollständig zu beseitigen, der durch die während des Schleuderns auftretenden Zentrifugalkraft ausgeübt wird.

23. Wasch- und Schleudermaschine nach einem der vorhergehenden Ansprüche, **dadurch gekennzeichnet, dass** die Teile, die über der perforierten Oberfläche (9) der Trommel verwendet werden, auf eine solche Weise ausgebildet sind, dass sie ein Profil (45-e) bilden, welches die Vorsprünge (45) und auch die Vertiefungszone (46) aufweist, wobei das Profil auch die Trommelperforationen (8) und die Löcher (21) in der mit Trommelperforationen abgestimmten Vertiefungszone (46) mit geringeren und / oder kleineren Durchmessern als die Perforationen der herkömmlichen Trommeln zur Verringerung der Flüssigkeitspermeabilität der Trommel abdeckt.

24. Wasch- und Spülvorgang in einer Waschmaschine nach den Ansprüchen 1 bis 13, **dadurch gekennzeichnet, dass** zur Vermeidung von Schäden an empfindlichen Materialien während sich die Trommel schneller als ihre Verteilungsgeschwindigkeit dreht, die Umwälzflüssigkeit über das gesamte Gewebe übertragen wird, das auf die auf der Trommeloberfläche angeordneten Vorsprünge verteilt ist.

## Revendications

1. Machine à laver/essorer (1) comprenant :
une cuve à liquide (10) disposée soit horizontalement soit inclinée par rapport à l'horizontale,
un tambour perforé (5), qui tourne dans la cuve à liquide (10) autour d'un système arbre/palier (11),
**caractérisée en ce que**
une surface cylindrique (9) du tambour perforé (5) est dotée d'une configuration nervurée afin d'obtenir une surface avec des saillies (45) et des creux (46) denses de formes et de tailles diverses ;
**en ce que** la hauteur desdites saillies (45) est inférieure à 6 % du diamètre dudit tambour (5) ;
**en ce que** les saillies (45) sur la surface cylindrique dudit tambour (5) sont disposées côte à côte pour constituer des creux (46) entre celles-ci ; et
dans laquelle les perforations de tambour (21) fournies sur la surface cylindrique (9) dudit tambour (5) sont agencées dans les creux (46) entre lesdites saillies (45),
et dans laquelle lesdites saillies (45) sont surélevées de manière adéquate et fournies de manière dense de sorte que le linge qui est étiré vers les creux entre les saillies (45) ne parvienne pas à boucher les perforations (21).

2. Machine selon la revendication 1, **caractérisée en ce que** lesdites saillies (45) suffisent à elles seules à déplacer les matériaux en train d'être lavés avec le tambour (5).

3. Machine selon la revendication 1, **caractérisée en ce qu'**une tôle métallique qui constitue la surface cylindrique (9) dudit tambour (5) est ondulée (33-a) par des indentations et des saillies ondulées (45-g).

4. Machine selon la revendication 1, **caractérisée en ce que** la surface cylindrique (9) dudit tambour (5) est faite d'une matière plastique (33-b) présentant une forme ondulée avec des indentations et des saillies (45).

5. Machine selon la revendication 1, **caractérisée en ce qu'**un revêtement (31) formé de manière ondulée sur la surface cylindrique (9) dudit tambour (5) comprend une seule pièce (31-a, b, c) ou plusieurs pièces (31-b) fixées sur la surface de manière permanente ou amovible.

6. Machine selon les revendications 1 à 5, **caractérisée en ce que** lesdites saillies (45) sont fournies sur la surface cylindrique dudit tambour (5) soit seules à la place des nervures de taille normale (50) soit en plus des nervures classiques de taille normale (50).

7. Machine selon les revendications 1 à 6, **caractérisée en ce que** lesdites saillies (45) sont agencées sur la totalité de la surface intérieure dudit tambour (5) sous la forme de petites nervures (45-a, d, e, g, h, i, j).

8. Machine selon la revendication 7, **caractérisée en ce que** lesdites nervures de petite taille (45) sont disposées sur la surface dudit tambour (5) à un angle par rapport à l'axe de rotation ou selon une forme hélicoïdale pour déplacer le linge dans la même direction que l'axe de rotation, soit de l'arrière vers l'avant soit inversement, au cours de la rotation du tambour.

9. Machine selon la revendication 7, **caractérisée en ce que** lesdites saillies de petite taille (45) sont disposées sur la surface dudit tambour (5) de manière à recouvrir complètement les perforations de tambour (21) tout en permettant à l'écoulement de liquide en-dessous de l'espace d'atteindre les perforations de tambour.

10. Machine selon la revendication 7, **caractérisée en ce que** lesdites saillies (45) sont localement surélevées à diverses hauteurs de sorte à former une forme de surface non homogène qui aide à soulever le matériau vers le haut.

11. Machine selon la revendication 1, **caractérisée en ce que** les perforations de tambour (21) sont dimensionnées de sorte à permettre aux grands morceaux de saletés ou granulats de quitter le tambour.

12. Machine selon la revendication 1, **caractérisée en ce que** les perforations de tambour (21) sont dimensionnées de manière à être suffisamment petites pour réduire la perméabilité aux liquides du tambour.

13. Machine selon les revendications précédentes,
**caractérisée en ce qu'**une pompe (16) est fournie de sorte à être actionnée sous commande, montée sur une ligne de circulation (40) qui permet, lorsqu'un niveau ou une quantité requis(e) de liquide de lavage ou de rinçage est fourni(e) dans le tambour (5) de réduire le niveau de liquide de la cuve ou de maintenir le niveau de liquide de la cuve à un niveau souhaité ou d'évacuer complètement le liquide de la cuve lorsque cela est nécessaire,
dans laquelle le liquide de la cuve qui existe dans un volume (39) entre ledit tambour (5) et la cuve (10) et qui est drainé du tambour (5) à l'intérieur de la cuve (10) est aspiré à partir de la cuve (10) afin de pomper en retour ledit liquide vers le tambour (5), dans laquelle
ladite pompe (16) présente une capacité de débit supérieure à une capacité de vitesse de drainage de liquide à partir dudit tambour (5) dans la cuve (10) ; et **en ce que**
la perméabilité dudit tambour (5) est limitée pour permettre à la pompe (16) de modifier le niveau ou de maintenir le niveau de liquide de la cuve dans le volume (39) entre la cuve (10) et le tambour (5) comme souhaité ou pour évacuer complètement ledit liquide de la cuve lorsque cela est requis au moyen de ladite pompe (16),
dans laquelle les quantités et les tailles desdites perforations de tambour (20) sont fournies de telle manière que la vitesse de drainage du liquide à partir desdites perforations est inférieure au débit de la pompe (16) qui est utilisée pour pomper le liquide en retour dans le tambour (5).

14. Machine selon la revendication 13, **caractérisée en ce que** ladite ligne de circulation (40) accède à l'intérieur dudit tambour (5) à travers une porte (35) ou un soufflet de bouche de tambour/cuve (12) ou un arbre de tambour (11).

15. Machine selon la revendication 13, **caractérisée en ce que** des produits chimiques sont ajoutés au liquide de lavage avant la ligne de circulation (40) et avant que la pompe (16) ne soit actionnée ; un liquide de cuve est chauffé au moyen d'une pompe à jet de vapeur ou d'un échangeur de chaleur sur la ligne de circulation (40) et les particules dans le liquide de circulation sont filtrées à travers un filtre (18).

16. Machine selon la revendication 13, **caractérisée en ce que** dans ledit tambour (5), le nombre et/ou les tailles des perforations de passage de liquide (20) du tambour (5) réalisant ladite perméabilité du tambour sont réduits comparativement aux tambours classiques.

17. Machine selon la revendication 13, **caractérisée en ce qu'**afin de limiter la perméabilité dudit tambour (5), des surfaces perforées (9) dudit tambour sont revêtues d'un matériau permanent ou amovible pour limiter l'écoulement d'eau et **en ce que** les formes, les quantités et les tailles desdites perforations (21) du revêtement (22) sont fournies de manière à assurer que la vitesse de drainage du liquide à partir desdites perforations est inférieure au débit de la pompe (16) qui est utilisée pour pomper en retour le liquide dans le tambour (5).

18. Machine selon la revendication 17, **caractérisée en ce que** ledit revêtement (22) est fait de divers matériaux tels que du caoutchouc, du plastique, du métal, un matériau tissé ou tout autre matériau présentant une perméabilité limitée aux liquides du fait de sa structure poreuse.

19. Machine selon la revendication 18, **caractérisée en ce que** ledit revêtement de surface (22-d) en caoutchouc, plastique ou similaires comprend des parties renflées (27) de diverses tailles et formes entre lesdites perforations (21).

20. Machine selon la revendication 18, **caractérisée en ce que** de petites fentes (23) correspondant aux perforations de tambour (8), sans laisser de place entre celles-ci, sont fournies sur ledit revêtement en caoutchouc ou plastique.

21. Machine selon la revendication 13, **caractérisée en ce qu'**afin de limiter la perméabilité aux liquides dudit tambour (5) le passage (37) autour de la bouche de tambour (14) vers la cuve (10) est recouvert d'une garniture d'étanchéité (34) appropriée.

22. Machine selon la revendication 21, **caractérisée en ce que** ladite garniture (34) est montée sur la bouche de tambour (14) de sorte à tourner avec le tambour (5), et **en ce qu'**elle touche soit une surface spécifique de la cuve ou de la porte de cuve (13) soit une surface appropriée (35) afin de limiter le passage de liquide et, si souhaité, ladite garniture (34) est dotée d'une saillie de contrepoids (36) pour réduire ou éliminer totalement la pression provoquée par la force centrifuge exercée pendant l'essorage.

23. Machine selon les revendications ci-dessus, **caractérisée en ce que** les parties utilisées sur la surface perforée (9) dudit tambour sont configurées pour constituer un profilé (45-e) comprenant des saillies (45) ainsi que la zone creuse (46), ledit profilé recouvrant également les perforations de tambour (8) ; et des alésages (21) dans la zone creuse (46) correspondant aux perforations de tambour, en un nombre moindre et/ou de diamètre inférieur que les perforations des tambours classiques, pour réduire la perméabilité aux liquides du tambour.

24. Procédé de lavage et de rinçage dans une machine à laver selon les revendications 1 à 13, **caractérisé en ce qu'**afin d'éviter tout endommagement des matériaux délicats, lorsque le tambour tourne plus rapidement que sa vitesse de distribution, du liquide de circulation est transmis à travers le textile qui est réparti sur les saillies disposées sur la surface du tambour.
